# EUROPEAN PATENT APPLICATION

(11) **EP 3 439 137 A1**
(43) Date of publication of application: **06.02.2019**
(21) Application number: 17772955.5
(22) Date of filing: 04.02.2017
(51) Int. Cl.: H02J 7/02, B60L 11/18, H02M 7/797

(54) **ON-VEHICLE CHARGER AND VEHICLE**

(30) Priority: 30.03.2016 CN 201610192757; 30.03.2016 CN 201620255161 U
(71) Applicant: BYD Company Limited, Shenzhen, Guangdong 518118 (CN)
(72) Inventor: YANG, Shiqing, Shenzhen Guangdong 518118 (CN)
(74) Representative: Gulde & Partner
(86) International application number: PCT/CN2017/072884
(87) International publication number: WO 2017/166924

(57) **Abstract**

The present invention discloses a car charger. The car charger includes a bidirectional converter module, a bidirectional direct current (DC)/DC conversion module, a collection module, and a control module. The bidirectional converter module is connected to an alternating current (AC) terminal. The bidirectional DC/DC conversion module includes a first DC conversion unit, a transformer unit, and a second DC conversion unit. The first DC conversion unit is connected to the bidirectional converter module and the transformer unit. The second DC conversion unit is connected to a transformer module and an energy storage device. The collection module collects an output of the AC terminal, a rectified output of the bidirectional converter module, and an output of the second DC conversion unit, and collects an output of the energy storage device, an output of the first DC conversion unit, and an inverter output of the bidirectional converter module. The control module performs controlling according to the data collected by the collection module. The car charger can implement bidirectional energy transmission and isolate an AC side and a DC side. The present invention further discloses a vehicle.

## Description

### BACKGROUND

### Technical Field

The present invention relates to the field of vehicle technologies, and in particular, to a car charger and a vehicle having the car charger.

### Related Art

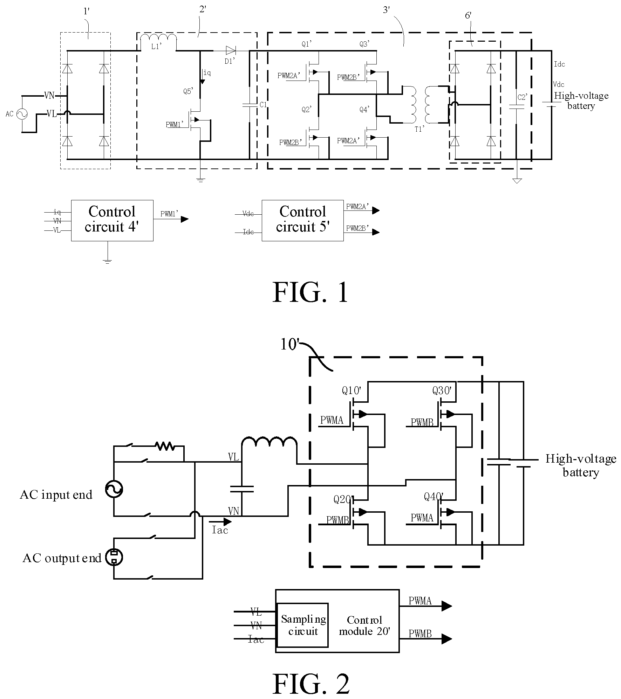

There are various car chargers such as unidirectional and bidirectional car chargers. In the related art, as shown in FIG. 1, FIG. 1 is a unidirectional isolated car charger in the related art. The car charger includes a rectifier bridge circuit 1', a power factor correction circuit 2', a direct current (DC)/DC isolated converter 3', a control circuit 4' and a control circuit 5'. The car charger intelligently implements charging of an energy storage device, that is, a battery. The rectifier bridge circuit 1' converts an external alternating current (AC) into a DC current (half wave). The power factor correction circuit 2' includes a power tube Q5', an inductor L1', a diode D1' and a filter capacitor C1'. The control circuit 4' collects an AC input voltage VL/VN and a current iq of the power tube Q5', obtains a pulse width modulation (PWM) wave (PWM1') with an appropriate duty cycle through calculation, controls the power tube Q5', and makes the AC input current synchronized with the input voltage, thereby improving an AC terminal power factor. The DC/DC isolated converter 3' includes power tubes Q1', Q2', Q3' and Q4', a transformer T1', a rectifier bridge circuit 6' and a filter capacitor C2'. The control circuit 5' collects a DC output voltage Vdc and a DC current Idc, obtains a PWM wave (PWM2') with an appropriate duty cycle through calculation, controls turning on or off of the power tubes Q1', Q2', Q3' and Q4', stabilizes an output DC voltage by using the transformer T1' and the rectifier circuit 6', and changes an energy storage device such as a high-voltage battery.

As shown in FIG. 2, FIG. 2 is a circuit diagram of a bidirectional non-isolated car charger in the related art. The car charger includes a bidirectional converter circuit 10' (PWM rectifier circuit) including four power controllable switch tubes, a boost circuit and a filter capacitor. During charging, the converter circuit 10' is used as a controllable DC circuit, an AC current is connected to a controllable rectifier circuit, and a control module 20' performs Sinusoidal PWM (SPWM) control on power tubes Q10' to Q40' to output a DC current (half wave) and is connected to a high voltage battery pack. During discharging, the converter circuit 10' is used as an inverter circuit, and the high voltage battery pack is connected to the inverter circuit and outputs an AC current to a load of an AC terminal for use.

However, the unidirectional isolated car charger has a complex topology and a large quantity of power devices, and needs to be controlled at multiple levels, leading to high costs and low efficiency. A diode of a rectifier bridge, a controllable switch tube of the power factor correction circuit, a controllable switch tube of a DC/DC converter and an isolated rectifier circuit all have controllable switch losses, making an energy storage device incapable of outputting an AC current externally.

Although the bidirectional non-isolated car charger has a simple structure and relatively low costs, there are many problems because of its non-isolated system. For example, limited by a limit of an AC peak voltage, when an output voltage is lower than the AC peak value voltage, charging cannot be directly performed by using a circuit. Further, as a DC voltage increases, a loss of a power tube controllable switch increases, efficiency decreases, and heat dissipation becomes more difficult. The power tube needs to withstand higher voltage stress while satisfying power. The voltage stress refers to a ratio of an actual voltage to a device specification value. Higher voltage stress indicates a greater pressure withstood by the power tube.

Further, in the non-isolated system, the AC and DC are switched by the controllable switch tube. A high common-mode voltage on the AC side is difficult to eliminate and there is a great potential safety hazard. A current discharged by the DC side to the ground is finally fed back to a power grid through an AC line. When a product is working, an AC leakage current detection value is relatively large, which easily triggers leakage protection.

### SUMMARY

An objective of the present invention is to at least resolve one of the technical problems in the related art to some extent.

Therefore, the present invention needs to provide a car charger. The car charger can implement bidirectional electric energy transmission and it is safer to use an isolated design.

The present invention further provides a vehicle having the car charger.

To resolve the foregoing problem, according to one aspect, this application provides a car charger. The car charger includes: a bidirectional converter module, where a first end of the bidirectional converter module is connected to one end of an AC terminal, and a second end of the bidirectional converter module is connected to the other end of the AC terminal; a bidirectional DC/DC conversion module, where the bidirectional DC/DC conversion module includes: a first DC conversion unit, where a first end of the first DC conversion unit is connected to a third end of the bidirectional converter module, and a second end of the first DC conversion unit is connected to a fourth end of the bidirectional converter module; a transformer unit, where a first end of the transformer unit is connected to a third end of the first DC conversion unit, and a second end of the transformer unit is connected to a fourth end of the first DC conversion unit; and a second DC conversion unit, where a first end of the second DC conversion unit is connected to a third end of the transformer unit, a second end of the second DC conversion unit is connected to a fourth end of the transformer unit, a third end of the second DC conversion unit is connected to one end of an energy storage device, and a fourth end of the second DC conversion unit is connected to another end of the energy storage device; a collection module, where the collection module collects an output of the AC terminal, a rectified output of the bidirectional converter module, and an output of the second DC conversion unit, and collects an output of the energy storage device, an output of the first DC conversion unit, and an inverter output of the bidirectional converter module; and a control module, where the control module controls the bidirectional converter module, the first DC conversion unit, and the second DC conversion unit according to the data collected by the collection module, so that the energy storage device performs charging or discharging.

The car charger of the present invention can implement bidirectional flow of energy and improve efficiency based on a combination of the bidirectional converter module and the bidirectional DC/DC conversion module. The bidirectional DC/DC conversion module uses the transformer unit for isolation, so that a common-mode voltage on the AC side can be reduced to isolate the AC side from the DC side, thereby improving safety and reducing conducted radiation. A DC voltage has a wide application range.

Based on the foregoing car charger, according to another aspect, the present invention further provides a vehicle. The vehicle includes the car charger described above.

By using the car charger according to the foregoing aspect, the vehicle can implement bidirectional energy transmission, isolate the AC side from the DC side, reduce the common-mode voltage on the AC side, and improve safety.

### BRIEF DESCRIPTION OF THE DRAWINGS

FIG. 1 is a schematic diagram of a circuit of a unidirectional isolated car charger in the related art;
FIG. 2 shows a bidirectional non-isolated car charger in the related art;
FIG. 3 is a block diagram of a car charger according to an embodiment of the present invention;
FIG. 4 is a schematic circuit diagram of a car charger according to a specific embodiment of the present invention; and
FIG. 5 is a block diagram of a vehicle according to an embodiment of the present invention.

### DETAILED DESCRIPTION

The following describes in detail embodiments of the present invention. Examples of the embodiments are shown in the accompanying drawings, where reference signs that are the same or similar from beginning to end represent same or similar components or components that have same or similar functions. The following embodiments described with reference to the accompanying drawings are exemplary, and are intended to describe the present invention and cannot be construed as a limitation to the present invention.

The following describes a car charger provided in the embodiments of the present invention with reference to the accompanying drawings.

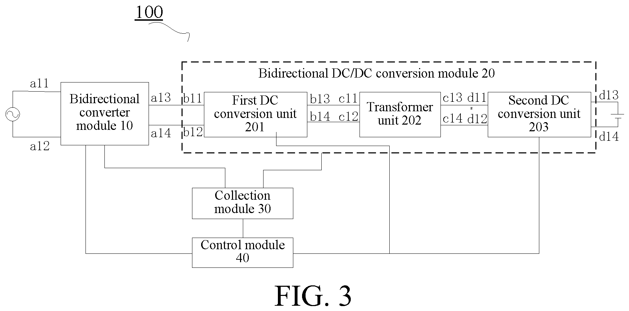

FIG. 3 is a block diagram of a car charger according to an embodiment of the present invention. As shown in FIG. 3, the car charger 100 includes a bidirectional converter module 10, a bidirectional DC/DC conversion module 20, a collection module 30, and a control module 40.

A first end a11 of the bidirectional converter module 10 is connected to one end of an AC terminal. A second end a12 of the bidirectional converter module 10 is connected to the other end of the AC terminal. The bidirectional DC/DC conversion module 20 includes a first DC conversion unit 201, a transformer unit 202, and a second DC conversion unit 203.

A first end b11 of the first DC conversion unit 201 is connected to a third end a13 of the bidirectional converter module 10. A second end b12 of the first DC conversion unit 201 is connected to a fourth end a14 of the bidirectional converter module 10. A first end c11 of the transformer unit 202 is connected to a third end b13 of the first DC conversion unit 201. A second end c12 of the transformer unit 202 is connected to a fourth end b14 of the first DC conversion unit 201. A first end d11 of the second DC conversion unit 203 is connected to a third end c13 of the transformer unit 202. A second end d12 of the second DC conversion unit 203 is connected to a fourth end c14 of the transformer unit 202. A third end d13 of the second DC conversion unit 203 is connected to one end of an energy storage device such as a high-voltage battery. A fourth end d14 of the second DC conversion unit 203 is connected to another end of the energy storage device.

The collection module 30 collects an output such as an output current signal and current and voltage signals of the AC terminal, a rectified output of the bidirectional converter module 10, and an output of the second DC conversion unit 203, and collects an output of the energy storage device, an output of the first DC conversion unit 201, and an inverter output of the bidirectional converter module 10.

The control module 40 controls the bidirectional converter module 10, the first DC conversion unit 201, and the second DC conversion unit 203 according to the data collected by the collection module 30, so that the energy storage device performs charging or discharging to implement bidirectional electric power transmission.

The car charger 100 in this embodiment of the present invention obtains a bidirectional isolated converter circuit by combining the bidirectional converter module 10 such as a bidirectional PWM rectifier circuit and an isolated bidirectional DC/DC conversion module 20. "Bidirectional" herein may be construed as being capable of implementing both rectification and inversion.

Specifically, during charging of the energy storage device such as a high voltage battery pack, the bidirectional converter module 10 is used as a rectifier circuit and the bidirectional DC/DC conversion module 20 is used as an inverter-transformer transmission-rectifier circuit. The first DC conversion unit 201 performs inversion control, the transformer unit 202 provides an isolation function to isolate the AC side from the DC side, and the second DC conversion unit 203 performs rectification control. An AC current is connected to the bidirectional converter module 10 as an input end. The control module 40 performs calculation according to the data collected by the collection module 30 and performs SPWM control on the bidirectional converter module 10, to output a DC current such as a half wave DC current. After an output DC voltage is stabilized, the control module 40 controls the first DC conversion unit 201 to convert the DC current into an AC current, controls the transformer unit 202 to transmit energy, then rectifies the AC current into a DC current by using the second DC conversion unit 203, and connects the DC current to the energy storage device such as a high voltage battery pack, to implement a charging function of the energy storage device.

During discharging of the energy storage device, the bidirectional converter module 10 such as a PWM rectifier circuit is used as an inverter circuit, and the bidirectional DC/DC conversion unit 20 is also used as an inverter-transformer transmission-rectifier circuit. The energy storage device such as a high voltage battery pack is used as an input end and connected to the second DC conversion unit 203. The second DC conversion unit 203 converts a DC current output by the high voltage battery pack into an AC current. The transformer unit 202 transmits energy. Then the first DC conversion unit 201 rectifies the AC current into a DC current and outputs the DC current into the bidirectional converter module 10. The bidirectional converter module 10 converts the DC current into an AC current, for use by a load of the AC terminal, thereby implementing a discharging function of the energy storage device.

It can be seen that the car charger 100 of this embodiment of the present invention uses the bidirectional converter module 10 and the bidirectional DC/DC conversion module 20, to implement bidirectional energy transmission. The AC current can be used to charge the energy storage device and the energy storage device can perform outputting to provide power for an AC load of the AC terminal. An isolation design of using the transformer unit 202 in the bidirectional DC/DC conversion module 20 can reduce a common-mode voltage on the AC side and isolate the AC side from the DC side, thereby improving safety. The transformer unit 202 is used to increase or reduce a voltage, and a DC voltage has a wide application range, thereby reducing conducted radiation.

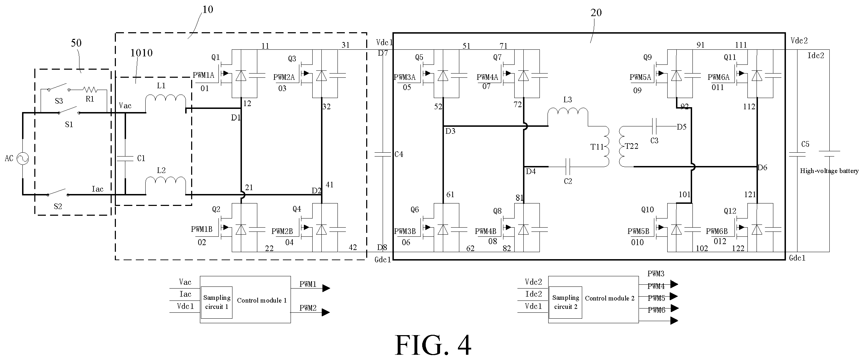

The following further describes the modules of the car charger 100 of this embodiment of the present invention with reference to FIG. 4.

The bidirectional converter module 10 may be a controllable bidirectional PWM rectifier circuit. The bidirectional converter module 10 includes a first controllable switch Q1, a second controllable switch Q2, a third controllable switch Q3, and a fourth controllable switch Q4.

A control end 01 of the first controllable switch Q1 is connected to the control module 40. A control end 02 of the second controllable switch Q2 is connected to the control module 40. A first end 21 of the second controllable switch Q2 is connected to a second end 12 of the first controllable switch Q1. There is a first node D1 between the first end 21 of the second controllable switch Q2 and the second end 12 of the first controllable switch Q1. The first node D1 is connected to one end of the AC terminal. A control end 03 of the third controllable switch Q3 is connected to the control module 40. A first end 31 of the third controllable switch Q3 is connected to a first end 11 of the first controllable switch Q1 and the first DC conversion unit 201. A control end 04 of the fourth controllable switch Q4 is connected to the control module 40. A first end 41 of the fourth controllable switch Q4 is connected to a second end 32 of the third controllable switch Q3. There is a second node D2 between the first end 41 of the fourth controllable switch Q4 and the second end 32 of the third controllable switch Q3. The second node D2 is connected to the other end of the AC terminal. A second end 42 of the fourth controllable switch Q4 is connected to a second end 22 of the second controllable switch Q2 and the first DC conversion unit 201.

During outputting of the AC terminal, that is, during charging of the energy storage device, the control module 40 controls the first controllable switch Q1, the second controllable switch Q2, the third controllable switch Q3 and the fourth controllable switch Q4 according to an AC voltage and an AC current output by the AC terminal and a rectified output voltage of the bidirectional converter module 10. The bidirectional converter module 10 implements a rectification function.

During discharging of the energy storage device, the control module 40 controls the first controllable switch Q1, the second controllable switch Q2, the third controllable switch Q3, and the fourth controllable switch Q4 according to an AC voltage of the inverter output of the bidirectional converter module 10. The bidirectional converter module 10 implements an inversion function.

As shown in FIG. 4, the bidirectional converter module 10 further includes a filter unit 1010. The filter unit 1010 includes a first inductor L1, a second inductor L2, and a first capacitor C1. A first end of the first inductor L1 is connected to one end of the AC terminal. A second end of the first inductor L1 is connected to the first node D1. A first end of the second inductor L2 is connected to the other end of the AC terminal. A second end of the second inductor L2 is connected to the second node D2. A first end of the first capacitor C1 is connected to the first end of the first inductor L1 and one end of the AC terminal. A second end of the first capacitor C1 is connected to the first end of the second inductor L2 and the other end of the AC terminal.

The first DC conversion unit 201 includes a fifth controllable switch Q5, a sixth controllable switch Q6, a seventh controllable switch Q7, and an eighth controllable switch Q8.

A control end 05 of the fifth controllable switch Q5 is connected to the control module 40. A first end 51 of the fifth controllable switch Q5 is connected to the first end 31 of the third controllable switch Q3. A control end 06 of the sixth controllable switch Q6 is connected to the control module 40. A first end 61 of the sixth controllable switch Q6 is connected to a second end 52 of the fifth controllable switch Q5. There is a third node D3 between the first end 61 of the sixth controllable switch Q6 and a second end 52 of the fifth controllable switch Q5. A second end 62 of the sixth controllable switch Q6 is connected to the second end 42 of the fourth controllable switch Q4. A control end 07 of the seventh controllable switch Q7 is connected to the control module 40. A first end 71 of the seventh controllable switch Q7 is connected to the first end 51 of the fifth controllable switch Q5. A control end 08 of the eighth controllable switch Q8 is connected to the control module 40. A first end 81 of the eighth controllable switch Q8 is connected to a second end 72 of the seventh controllable switch Q7. There is a fourth node D4 between the first end 81 of the eighth controllable switch Q8 and a second end 72 of the seventh controllable switch Q7. A second end 82 of the eighth controllable switch Q8 is connected to the second end 62 of the sixth controllable switch Q6.

The second DC conversion unit 203 includes a ninth controllable switch Q9, a tenth controllable switch Q10, an eleventh controllable switch Q11, and a twelfth controllable switch Q12.

A control end 09 of the ninth controllable switch Q9 is connected to the control module 40. A control end 010 of the tenth controllable switch Q10 is connected to the control module 40. A first end 101 of the tenth controllable switch Q10 is connected to a second end 92 of the ninth controllable switch Q9. There is a fifth node D5 between the first end 101 of the tenth controllable switch Q10 and the second end 92 of the ninth controllable switch Q9. A control end 011 of the eleventh controllable switch Q11 is connected to the control module 40. A first end 111 of the eleventh controllable switch Q11 is connected to a first end 91 of the ninth controllable switch Q9 and one end of the energy storage device. A control end 012 of the twelfth controllable switch Q12 is connected to the control module 40. A first end 121 of the twelfth controllable switch Q12 is connected to a second end 112 of the eleventh controllable switch Q11. There is a sixth node D6 between the first end 121 of the twelfth controllable switch Q12 and a second end 112 of the eleventh controllable switch Q11. A second end 122 of the twelfth controllable switch Q12 is connected to a second end 102 of the tenth controllable switch Q10 and another end of the energy storage device. In this embodiment of the present invention, the second DC conversion unit 203 substitutes a controllable switch for a diode, so that transmission efficiency can be improved.

The transformer unit 202 includes a high frequency transformer. Different from the related art in which a bidirectional isolated AC/DC circuit function is implemented by using a circuit combining an industrial frequency transformer and a bidirectional rectifier, where the industrial frequency transformer is difficult to implement in vehicle, in this embodiment of the present invention, the high frequency transformer is used to implement high frequency isolated transmission, and bidirectional energy transmission can also be implemented.

The high frequency transformer includes a first coil T11 and a second coil T22. A first end of the first coil T11 is connected to the third node D3 by using a third inductor L3. A second end of the first coil T11 is connected to the fourth node D4 by using a second capacitor C2. A first end of the second coil T22 is connected to the fifth node D5 by using a third capacitor C3. A second end of the second coil T22 is connected to the sixth node D6. The high frequency transformer is used to isolate energy on the AC side from that on the DC side, improve safety, and implement bidirectional energy transmission. The high frequency transformer is used to increase and reduce a voltage, and the DC voltage has a wide application range.

During outputting of the AC terminal, that is, during charging of the energy storage device, the control module 40 performs inversion control on the fifth controllable switch Q5 to the eighth controllable switch Q8 and performs rectification control on the ninth controllable switch Q9 to the twelfth controllable switch Q12 according to a rectified output voltage of the bidirectional converter module 10 and an output current and an output voltage of the second DC conversion unit 203, to implement a charging function of the energy storage device.

During outputting of the energy storage device, the control module 40 performs inversion control on the ninth controllable switch Q9 to the twelfth controllable switch Q12 and performs rectification control on the fifth controllable switch Q5 to the eighth controllable switch Q8 according to a voltage and a current output by the energy storage device and a voltage output by the first DC conversion unit 201, to convert a DC current to an AC current by using the bidirectional converter module 10 and provide the AC current to a load of the AC terminal for use, thereby implementing discharging of the energy storage device.

As shown in FIG. 4, the car charger 100 further includes a switch module 50. The switch module 50 includes a first switch S1, a second switch S2, a third switch S3, and a first resistor R1. A first end of the first switch S1 is connected to one end of the AC terminal. A second end of the first switch S1 is connected to the first end of the first inductor L1. A first end of the second switch S2 is connected to the other end of the AC terminal. A second end of the second switch S2 is connected to the first end of the second inductor L2. A first end of the third switch S3 is connected to one end of the AC terminal and the first end of the first switch S1. A first end of the first resistor R1 is connected to a second end of the third switch S3. A second end of the first resistor R1 is connected to the second end of the first switch S1.

The car charger 100 further includes a fourth capacitor C4 and a fifth capacitor C5. There is a seventh node D7 between the first end 31 of the third controllable switch Q3 and the first end 51 of the fifth controllable switch Q5. A first end of the fourth capacitor C4 is connected to the seventh node D7. There is an eighth node D8 between the second end 42 of the fourth controllable switch Q4 and the second end 62 of the sixth controllable switch Q6. A second end of the fourth capacitor C4 is connected to the eighth node D8. The first end of the fifth capacitor C5 is connected to one end of the energy storage device. A second end of the fifth capacitor C5 is connected to another end of the energy storage device.

Referring to FIG. 4, the control module 40 includes a control module 1 and a control module 2, and the collection module 30 includes a sampling circuit 1 and a sampling circuit 2.

During charging of the energy storage device such as a high voltage battery pack, the second switch S2 and the third switch S3 are first controlled to be turned on. The sampling circuit 1 collects an AC voltage Vac, an AC current lac and an output DC voltage Vdc1 of the bidirectional converter module 10. The control module 1 outputs a PWM signal such as PWM 1 and PWM 2 after calculation. Controllable rectification is performed on the first controllable switch Q1 to the fourth controllable switch Q4 sequentially, and the DC voltage Vdc1 is output as a feedback, to implement AC-DC conversion and constant-voltage outputting. In addition, the AC current is synchronized with the AC voltage and a power factor is close to 1.

The fourth capacitor C4 performs filtering. After the voltage Vdc1 is constant, the sampling circuit 2 collects the voltage Vdc1, a DC output, that is, a battery voltage Vdc2 and a DC output current Idc2. The control module 2 outputs a PWM signal after calculation, performs inversion control on the fifth controllable switch Q5 to the eighth controllable switch Q8 sequentially, and continues to perform synchronized rectification control on the ninth controllable switch Q9 to the twelfth controllable switch Q12, to implement DC-DC conversion. In this way, charging power can be adjusted according to the current Idc2 that is fed back.

The high frequency transformer is used to isolate energy on the AC side from that on the DC side, so that a design of the high frequency transformer can be adjusted according to a range of the DC voltage for matching.

During discharging of the energy storage device, the energy storage device such as a high voltage battery pack is used as an input end. The sampling circuit 2 collects Vdc1, the battery voltage Vdc2 and a battery output current Idc2. The control module 2 outputs a PWM signal after calculation, performs inversion control on the ninth controllable switch Q9 to the twelfth controllable switch Q12 sequentially, performs synchronized rectification control on the fifth controllable switch Q5 to the eighth controllable switch Q8, and outputs the DC voltage Vdc1 as a feedback, to implement AC-DC conversion and constant-voltage outputting.

After the voltage Vdc1 is constant, Vdc1 is used as an input end. The sampling circuit 1 collects an AC voltage Vac as a feedback. The control module 1 outputs an SPWM waveform signal according to a sine law, controls the first controllable switch Q1 to the fourth controllable switch Q4, so that the AC terminal outputs an AC current at an appropriate voltage, and provides power for a load of the AC terminal, to implement inversion.

In conclusion, the car charger 100 of this embodiment of the present invention can implement bidirectional flow of energy and improve efficiency based on a combination of the bidirectional converter module 10 and the bidirectional DC/DC conversion module 20. The bidirectional DC/DC conversion module 20 uses the transformer unit 202 for isolation, so that a common-mode voltage on the AC side can be reduced to isolate the AC side from the DC side, thereby improving safety and reducing conducted radiation. A DC voltage has a wide application range.

Based on the car charger 100 of the embodiment according to the foregoing aspect, according to another aspect, an embodiment of the present invention provides a vehicle.

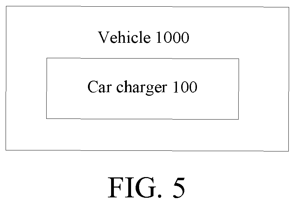

FIG. 5 is a block diagram of a vehicle according to an embodiment of the present invention. As shown in FIG. 5, the vehicle 1000 includes the car charger 100 of the embodiment according to the foregoing aspect.

By using the car charger 100 according to the foregoing aspect, the vehicle 1000 can implement bidirectional energy transmission, isolate the AC side from the DC side, reduce the common-mode voltage on the AC side, and improve safety.

It should be noted that in the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present invention. In the specification, the foregoing exemplary expressions of the terms are not necessarily with respect to a same embodiment or example. In addition, the described specific features, structures, materials, or characteristics may be combined in a proper manner in any one or more of the embodiments or examples. In addition, a person skilled in the art may integrate or combine different embodiments or examples and characteristics of different embodiments or examples described in the specification, as long as they do not conflict each other.

Although the embodiments of the present invention are shown and described above, it can be understood that, the foregoing embodiments are exemplary, and cannot be construed as a limitation to the present invention. Within the scope of the present invention, a person of ordinary skill in the art may make changes, modifications, replacement, and variations to the foregoing embodiments.

## Claims

1. A car charger, comprising:
a bidirectional converter module, wherein a first end of the bidirectional converter module is connected to one end of an alternating current (AC) terminal, and a second end of the bidirectional converter module is connected to the other end of the AC terminal;
a bidirectional direct current (DC)/DC conversion module, wherein the bidirectional DC/DC conversion module comprises:
a first DC conversion unit, wherein a first end of the first DC conversion unit is connected to a third end of the bidirectional converter module, and a second end of the first DC conversion unit is connected to a fourth end of the bidirectional converter module;
a transformer unit, wherein a first end of the transformer unit is connected to a third end of the first DC conversion unit, and a second end of the transformer unit is connected to a fourth end of the first DC conversion unit; and
a second DC conversion unit, wherein a first end of the second DC conversion unit is connected to a third end of the transformer unit, a second end of the second DC conversion unit is connected to a fourth end of the transformer unit, a third end of the second DC conversion unit is connected to one end of an energy storage device, and a fourth end of the second DC conversion unit is connected to another end of the energy storage device;
a collection module, wherein the collection module collects an output of the AC terminal, a rectified output of the bidirectional converter module, and an output of the second DC conversion unit, and collects an output of the energy storage device, an output of the first DC conversion unit, and an inverter output of the bidirectional converter module; and
a control module, wherein the control module controls the bidirectional converter module, the first DC conversion unit, and the second DC conversion unit according to the data collected by the collection module, so that the energy storage device performs charging or discharging.

2. The car charger according to claim 1, wherein the bidirectional converter module comprises:
a first controllable switch, wherein a control end of the first controllable switch is connected to the control module;
a second controllable switch, wherein a control end of the second controllable switch is connected to the control module, a first end of the second controllable switch is connected to a second end of the first controllable switch, there is a first node between the first end of the second controllable switch and the second end of the first controllable switch, and the first node is connected to one end of the AC terminal;
a third controllable switch, wherein a control end of the third controllable switch is connected to the control module, a first end of the third controllable switch is connected to a first end of the first controllable switch and the first DC conversion unit; and
a fourth controllable switch, wherein a control end of the fourth controllable switch is connected to the control module, a first end of the fourth controllable switch is connected to a second end of the third controllable switch, there is a second node between the first end of the fourth controllable switch and the second end of the third controllable switch, the second node is connected to the other end of the AC terminal, a second end of the fourth controllable switch is connected to a second end of the second controllable switch and the first DC conversion unit.

3. The car charger according to claim 2, wherein
during charging of the energy storage device, the control module controls the first controllable switch, the second controllable switch, the third controllable switch, and the fourth controllable switch according to an AC voltage and an AC current output by the AC terminal and a rectified output voltage of the bidirectional converter module; and
during discharging of the energy storage device, the control module controls the first controllable switch, the second controllable switch, the third controllable switch, and the fourth controllable switch according to an AC voltage of the inverter output of the bidirectional converter module.

4. The car charger according to claim 2, wherein the bidirectional converter module further comprises a filter unit, and the filter unit comprises:
a first inductor, wherein a first end of the first inductor is connected to one end of the AC terminal, and a second end of the first inductor is connected to the first node;
a second inductor, wherein a first end of the second inductor is connected to the other end of the AC terminal, and a second end of the second inductor is connected to the second node; and
a first capacitor, wherein a first end of the first capacitor is connected to the first end of the first inductor and one end of the AC terminal, and a second end of the first capacitor is connected to the first end of the second inductor and the other end of the AC terminal.

5. The car charger according to claim 2, wherein the first DC conversion unit comprises:
a fifth controllable switch, wherein a control end of the fifth controllable switch is connected to the control module, and a first end of the fifth controllable switch is connected to the first end of the third controllable switch;
a sixth controllable switch, wherein a control end of the sixth controllable switch is connected to the control module, a first end of the sixth controllable switch is connected to a second end of the fifth controllable switch, there is a third node between the first end of the sixth controllable switch and a second end of the fifth controllable switch, and a second end of the sixth controllable switch is connected to the second end of the fourth controllable switch;
a seventh controllable switch, wherein a control end of the seventh controllable switch is connected to the control module, and a first end of the seventh controllable switch is connected to the first end of the fifth controllable switch; and
an eighth controllable switch, wherein a control end of the eighth controllable switch is connected to the control module, a first end of the eighth controllable switch is connected to a second end of the seventh controllable switch, there is a fourth node between the first end of the eighth controllable switch and a second end of the seventh controllable switch, and a second end of the eighth controllable switch is connected to the second end of the sixth controllable switch.

6. The car charger according to claim 5, wherein the second DC conversion unit comprises:
a ninth controllable switch, wherein a control end of the ninth controllable switch is connected to the control module;
a tenth controllable switch, wherein a control end of the tenth controllable switch is connected to the control module, a first end of the tenth controllable switch is connected to a second end of the ninth controllable switch, and there is a fifth node between the first end of the tenth controllable switch and the second end of the ninth controllable switch;
an eleventh controllable switch, wherein a control end of the eleventh controllable switch is connected to the control module, a first end of the eleventh controllable switch is connected to a first end of the ninth controllable switch and one end of the energy storage device; and
a twelfth controllable switch, wherein a control end of the twelfth controllable switch is connected to the control module, a first end of the twelfth controllable switch is connected to a second end of the eleventh controllable switch, there is a sixth node between the first end of the twelfth controllable switch and a second end of the eleventh controllable switch, and a second end of the twelfth controllable switch is connected to a second end of the tenth controllable switch and another end of the energy storage device.

7. The car charger according to claim 6, wherein the transformer unit comprises a high frequency transformer, and the high frequency transformer comprises:
a first coil, wherein a first end of the first coil is connected to the third node by using a third inductor, and a second end of the first coil is connected to the fourth node by using a second capacitor; and
a second coil, wherein a first end of the second coil is connected to the fifth node by using a third capacitor, and a second end of the second coil is connected to the sixth node.

8. The car charger according to claim 7, wherein
during charging of the energy storage device, the control module performs inversion control on the fifth controllable switch to the eighth controllable switch and performs rectification control on the ninth controllable switch to the twelfth controllable switch according to a rectified output voltage of the bidirectional converter module and an output current and an output voltage of the second DC conversion unit; and
during discharging of the energy storage device, the control module performs inversion control on the ninth controllable switch to the twelfth controllable switch and performs rectification control on the fifth controllable switch to the eighth controllable switch according to a voltage and a current output by the energy storage device and a voltage output by the first DC conversion unit.

9. The car charger according to claim 4, further comprising a switch module, wherein the switch module comprises:
a first switch, wherein a first end of the first switch is connected to one end of the AC terminal, and a second end of the first switch is connected to the first end of the first inductor;
a second switch, wherein a first end of the second switch is connected to the other end of the AC terminal, and a second end of the second switch is connected to the first end of the second inductor;
a third switch, wherein a first end of the third switch is connected to one end of the AC terminal and the first end of the first switch; and
a first resistor, wherein a first end of the first resistor is connected to a second end of the third switch, and a second end of the first resistor is connected to the second end of the first switch.

10. The car charger according to claim 6, further comprising:
a fourth capacitor, wherein there is a seventh node between the first end of the third controllable switch and the first end of the fifth controllable switch, a first end of the fourth capacitor is connected to the seventh node, there is an eighth node between the second end of the fourth controllable switch and the second end of the sixth controllable switch, and a second end of the fourth capacitor is connected to the eighth node; and
a fifth capacitor, wherein the first end of the fifth capacitor is connected to one end of the energy storage device, and a second end of the fifth capacitor is connected to another end of the energy storage device.

11. A vehicle, comprising the car charger according to any one of claims 1 to 10.
